# EUROPÄISCHE PATENTSCHRIFT

(11) **EP 1 037 778 B1**
(45) Veröffentlichungstag und Bekanntmachung des Hinweises auf die Patenterteilung: **26.01.2005**
(21) Anmeldenummer: 99945877.1
(22) Anmeldetag: 01.07.1999
(51) Int. Cl.: B60S 1/38

(54) **WISCHBLATT FÜR SCHEIBEN VON KRAFTFAHRZEUGEN**
WIPER BLADE FOR MOTOR VEHICLE WINDOWS
RACLETTE D'ESSUIE-GLACE POUR VITRES DE VEHICULES AUTOMOBILES

(30) Priorität: 27.07.1998 DE 19833666
(43) Veröffentlichungstag der Anmeldung: 27.09.2000
(73) Patentinhaber: ROBERT BOSCH GMBH, 70442 Stuttgart (DE)
(72) Erfinder: KOTLARSKI, Thomas, D-53474 Bad Neuenahr (DE)
(86) Internationale Anmeldenummer: PCT/DE1999/002021
(87) Internationale Veröffentlichungsnummer: WO 2000/006431

(56) Entgegenhaltungen:
- EP-A- 0 591 063
- WO-A-98/04443
- WO-A-98/19899
- US-A- 3 785 002

## Beschreibung

### Stand der Technik

Bei Wischblättern der im Oberbegriff des Anspruchs 1 bezeichneten Art soll das Tragelement über das gesamte vom Wischblatt bestrichene Wischfeld eine möglichst gleichmäßige Verteilung des vom Wischerarm ausgehenden Wischblatt-Anpressdrucks an der Scheibe gewährleisten. Durch eine entsprechende Krümmung des unbelasteten Tragelements - also wenn das Wischblatt nicht an der Scheibe anliegt - werden die Enden der im Betrieb des Wischblatts vollständig an der Scheibe angelegten Wischleiste durch das dann gespannte Tragelement zur Scheibe belastet, auch wenn sich die Krümmungsradien von sphärisch gekrümmten Fahrzeugscheiben bei jeder Wischblattposition ändern. Die Krümmung des Wischblatts muß also etwas stärker sein als die im Wischfeld an der zu wischenden Scheibe gemessene stärkste Krümmung. Das Tragelement ersetzt somit die aufwendige Tragbügelkonstruktion mit zwei an der Wischleiste angeordneten Federschienen, wie sie bei herkömmlichen Wischblättern praktiziert wird (DE-OS 15 05 357).

Die Erfindung geht aus von einem Wischblatt nach dem Oberbegriff des Anspruchs 1. Bei einem bekannten Wischblatt dieser Art (DE-PS 12 47 161) ist das wischblattseitige, starre Kupplungsteil fest mit dem Tragelement vernietet, so dass das Tragelement in seinem Mittelbereich völlig versteift ist. Die Anlagefläche zwischen Tragelement und der Unterseite des Kupplungsteils reicht somit über die gesamte Länge des Kupplungsteils, so dass dieser Abschnitt nicht zur Anpassung der Wischleiste an den Verlauf der Scheibenoberfläche beitragen kann. Eine der Erfindung ähnlichen Lehre ist einem Ausführungsbeispiel des bekannten Wischblatts entnehmbar, doch sind dort keine Hinweise auf den versteiften Mittelabschnitt des Tragelements und Maßnahmen zur Vermeidung dieses Mangels angegeben.

Ein weiteres bekanntes solches Wischblatt (WO-A-98/19899) weist eine U-förmige Anschlussvorrichtung auf, die mit ihrer Unterseite auf dem Tragelement aufgerastet ist. Auch hier wirkt dieser Abschnitt versteifend auf das Tragelement.

### Vorteile der Erfindung

Bei dem erfindungsgemäßen Wischblatt mit den kennzeichneten Merkmalen des Anspruchs 1 ist ein Kriterium erfüllt, welches die noch ohne erhebliche Nachteile hinnehmbare Versteifung des Tragelements-Mittelabschnitts eingrenzt.

Bei einem Wischblatt bei dem das Gelenk zwischen dem Kupplungsteil und dem Gegenkupplungsteil in Lageraufnahmen geführte Gelenkzapfen aufweist wird eine noch bessere Anpassung der Wischleiste an den Verlauf der Scheibenoberfläche erreicht, wenn die Anlagefläche zwischen Tragelement und dem Kupplungsteil in Längsrichtung des Wischblatts gemessen kleiner ist als der Durchmesser der Gelenkzapfen.

Eine optimale Anpassung der Wischleiste an den Verlauf der Scheibenoberfläche ergibt sich, wenn die Anlagefläche zwischen Tragelement und dem Kupplungsteil einer Linie entspricht, die sich in Richtung der Gelenkachse erstreckt und die innerhalb der Projektionsfläche der Gelenkzapfen liegt. Dadurch erfährt das Tragelement keine Versteifung durch das Kupplungsteil, so dass die gesamte Tragelementlänge zur Anpassung der Wischleiste an den Verlauf der Scheibenoberfläche nutzbar ist.

Zur ordnungsgemäßen Ausrichtung des Kupplungsteils am Tragelement hat dieses einen U-förmigen Querschnitt wobei die Innenseite der U-Basis die Unterseite des Kupplungsteils bildet und der Abstand der beiden U-Schenkel voreinander auf die im Längs-Mittelabschnitt des Tragelements vorhandene maximale Breite des Tragelements abgestimmt ist.

In Weiterbildung der Erfindung sind an dem freien Ende eines jeden U-Schenkels und mit Abstand von der Scheibe des Kupplungsteils zumindest im Bereich der Anlagefläche zwischen Tragelement und Kupplungsteil angeordnete, krallenartig gegeneinander gerichtete Ansätze vorhanden, welche Abstützungen für das Tragelement bilden. Dabei ist der Abstand so gemessen, daß sich beim Einführen des gekrümmten Tragelements dieses mit seiner unteren Bandfläche unter Spannung an zwei mit Abstand voneinander liegenden Punkten an den Ansätzen anliegt und daß es sich mit dem Scheitelbereich seiner oberen Bandfläche an der Unterseite des Kupplungsteils abstützt. Diese Abstützung ist linienförmig und quer zur Längserstreckung des Tragelements ausgerichtet.

Eine vorteilhafte, jedoch auch bei anders aufgebauten Wischblättern eigenständig nutzbare Ausgestaltung eines zum Wischblatt gehörenden Tragelements sieht vor, daß das Kupplungsteils einen aus einem Metall gefertigten, im Querschnitt U-förmigen Träger hat, dessen Außenwände mittels einer aus einem Kunststoff gefertigten, im Querschnitt U-förmigen Umhüllung abgedeckt sind und daß weiter an den Außenwänden der U-Schenkel der Umhüllung zur Gelenkverbindung zwischen Wischerarm und Wischblatt gehörenden Gelenkzapfen angeordnet sind. Der Metallträger garantiert einen zuverlässigen Wischbetrieb auch nach längerer Betriebsdauer, während bei der Materialauswahl für die Umhüllung die Belange der Wischblattlagerung am Wischerarm berücksichtigt werden können.

Wenn der metallische Träger mit seiner U-Basis verbundene, die beiden Längs-Außenkanten des Tragelements übergreifende Biegelappen aufweist, kann das Kupplungsteil mittels dieser Biegelappen auf einfache Weise mit dem Tragelement verbunden, daß heißt an diesem festgeklemmt werden.

Die Befestigung der Kunststoffumhüllung am metallischen Träger ist auf einfache Weise durch Aufrasten der Umhüllung möglich, wenn die aus einem elastischen Kunststoff gefertigte Umhüllung mit ihren U-Schenkeln über die U-Schenkel des Trägers hinausragt und an den freien Enden der U-Schenkel der Umhüllung gegeneinander vorspringende Rasthaken angeordnet sind.

Bei einem Wischblatt, bei dem das Kupplungsteil mit quer zur Längserstreckung des Wischblatts vorspringenden, zur Gelenkverbindung zwischen Wischerarm und Wischblatt gehörenden Gelenkzapfen versehen ist, welche an dem von der Antriebsseite des Wischerarms abliegenden Endabschnitt des Kupplungsteils angeordnet sind, ist es möglich einen beispielsweise an der von der Scheibe abgewandten Seite des Tragelements angeordnete Spoiler mit einer dem Fahrtwind zugewandten Anströmfläche bis nahe an die Gelenkverbindung heranzuführen, was die Anströmfläche vergrößert und darüber hinaus die Bildung einer unschönen Lücke zwischen Gelenk und Spoiler vermeidet. Die Anwendung dieser Ausgestaltung der Erfindung ist von dieser losgelöst selbstverständlich auch überall dort anwendbar, ein entsprechend ausgestaltetes, wischblattseitiges Kupplungsteil verwendet wird.

Bei einem Wischblatt mit einem in Längsrichtung geteilten Tragelement, dessen beiden einander zugewandten Längskanten in seitlichen Längsnuten einer mit der Wischleisten verbundenden Kopfleiste liegen, läßt sich die Montage des Kupplungsteils auf einfache Weise durchführen, wenn gemäß einer Fortbildung der Erfindung das Kupplungsteil in Längsrichtung des Tragelements geteilt und jede der beiden Kupplungsteilhälften mit einer der jeweiligen anderen Kupplungsteilhälfte zugewandten Längsnut zur Aufnahme eines Längsstreifens mit den voneinander abgewandten Längskanten der beiden Tragelementteile versehen ist und die beiden Kupplungsteilhälften miteinander verbindbar sind.

Eine besonders robuste Verbindung der beiden Kupplungsteilhälften miteinander wird erreicht, wenn wenigstens eine der beiden aus einem elastische Kunststoff gefertigten Kupplungsteilhälften mit einem fingerartigen Vorsprung die Längsmittelachse des Tragelements übergreifend in eine in der anderen Kupplungsteilhälfte vorhandene, diesem zugeordnete Ausnehmung eintaucht.

Zur Vereinfachung der Montage ist vorgesehen, daß der Vorsprung nahe seinem freien Ende mit einer zu seiner Kupplungsteilhälfte weisenden Rastschulter versehen ist, die mit der dieser zugewandten Längsseite der Kopfleiste rastend zusammenwirkt.

Die beiden Kupplungsteilhälften können nicht mehr unabsichtlich voneinander getrennt werden, wenn eine am freien Ende des Vorsprungs angeordnete Nase in einer Ausnehmung der anderen Kupplungsteilhälfte eintaucht.

Ein besonders stabiler Aufbau des Kupplungsteils wird erreicht, wenn die zungen- oder fingerartigen Vorsprünge der einen Kupplungsteilhälfte mit seitlichen Paßfedern versehen sind, denen Führungsnuten in der anderen Kupplungsteilhälfte zugeordnet sind.

Damit das Kupplungsteil nicht in Längsrichtung des Tragelements auf diesem verschoben werden kann ist das Tragelement im Bereich des Kupplungsteils mit einem seitlichen Vorsprung versehen, dem eine Ausnehmung in der dieser Seite zugewandten Innenseite des Kupplungsteils zugeordnet ist.

Eine sehr betriebssichere Verbindung zwischen Wischblatt und Wischerarm ergibt sich bei einem Wischblatt, welches in seinem Längs-Mittelabschnitt zwei die Gelenkachse bildende, miteinander fluchtende Gelenkzapfen aufweist, die in Lagerausnehmungen des Wischerarms geführt sind, wenn jede Lagerausnehmung einen zur zu wischenden Scheiben hin offenen, jeweils einem Gelenkzapfen zugeordneten Montagekanal aufweist.

Weitere vorteilhafte Weiterbildungen und Ausgestaltungen der Erfindung sind in der nachfolgende Beschreibung von in der dazugehörigen Zeichnung dargestellten Ausführungsbeispielen angegeben.

### Zeichnung

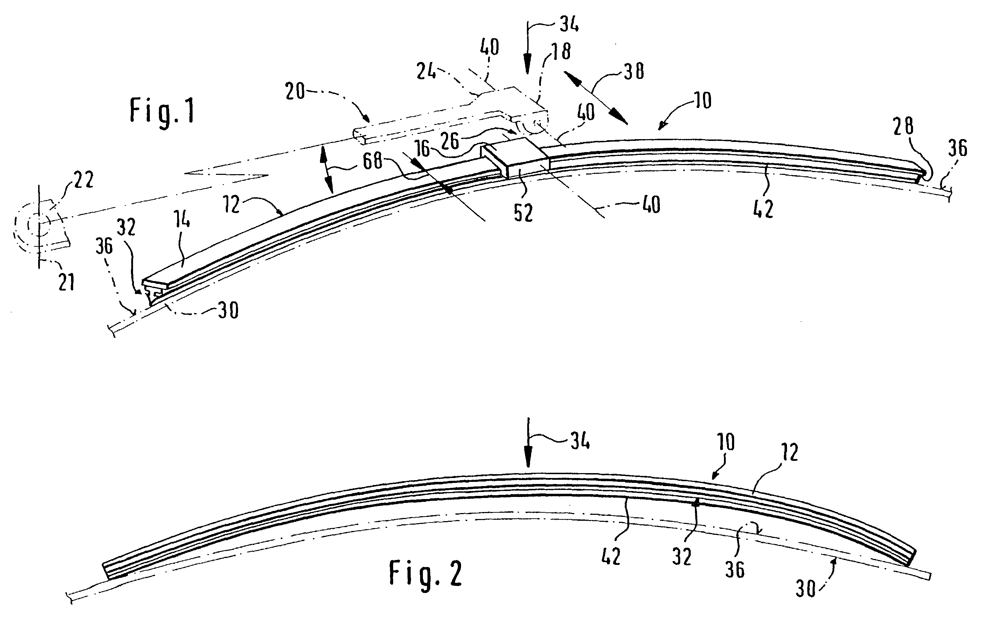

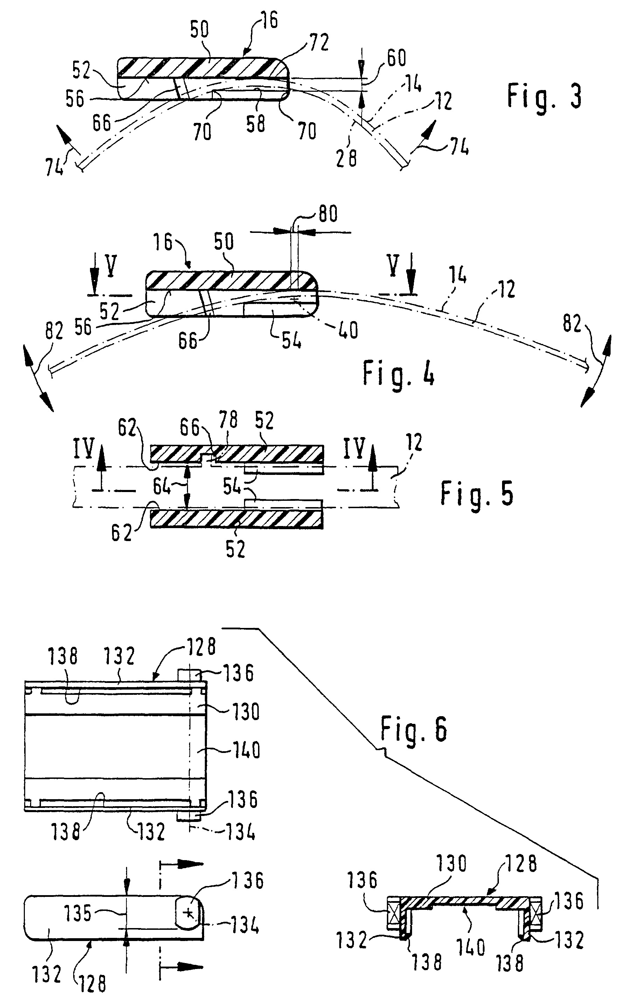

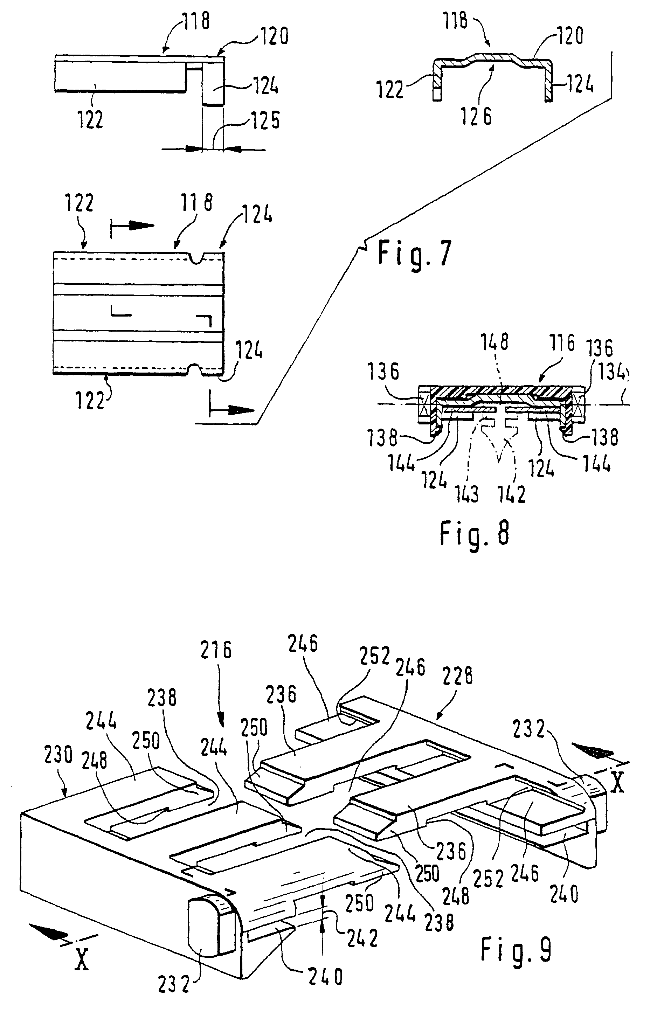

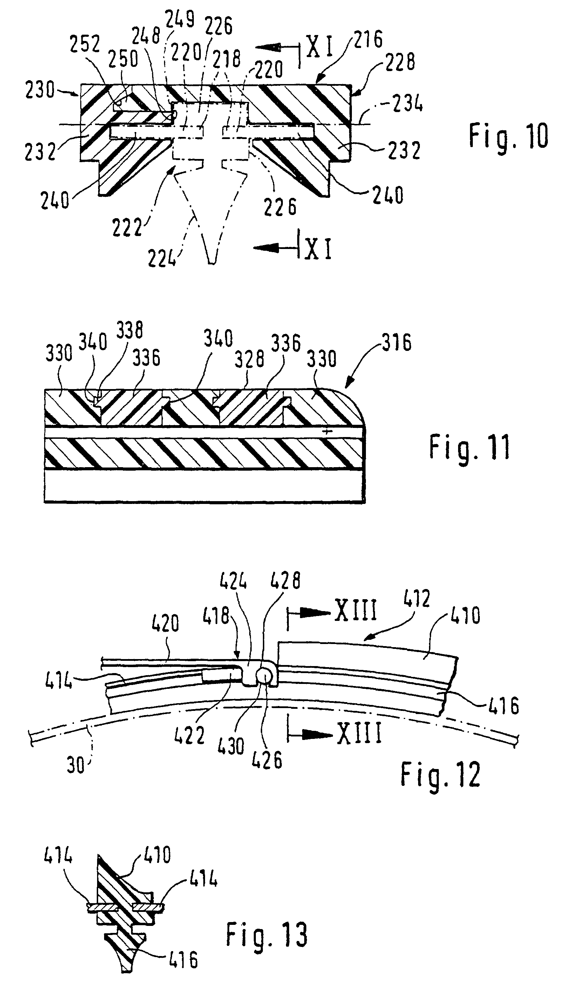

In der Zeichnung zeigen: Figur 1 eine perspektivische Prinzipdarstellung eines erfindungsgemäßen Wischblatts und eines zu diesem gehörenden, strichpunktiert angedeuteten Wischerarms, Figur 2 eine schematische Darstellung der Seitenansicht eines Wischblatts, das um ein bestimmtes Maß von der Scheibe abgehoben ist, Figur 3 einen Längsschnitt durch ein blattseitiges Kupplungsteil zum gelenkigen Verbinden des Wischblatts mit einem Gegenkupplungsteil des Wischerarms und strichpunktiert angedeutet einen Mittelabschnitt eines Tragelements für ein Wischelement an welches das Kupplungsteil vormontiert ist, Figur 4 die Anordnung gemäß Figur 3 wobei sich das Tragelement in seiner Betriebsposition befindet, Figur 5 einen Schnitt durch die Anordnung gemäß Figur 4 entlang der Linie V-V, Figur 6 zwei Ansichten und einen Schnitt einer zu einer anderen Ausführung des Kupplungsteils gehörenden Kunststoffumhüllung, Figur 7 zwei Ansichten und einen Schnitt eines metallischen Trägers für die Kunststoffumhüllung gemäß Figur 6, Figur 8 einen Schnitt gemäß den Figuren 6 und 7 durch das zusammengebaute, mit dem Tragelement verbundene Kupplungsteil, Figur 9 eine weitere Ausführung eines Kupplungsteils, das in Längsrichtung geteilt ist und dessen beide Kupplungsteilshälften in einer Vormontageposition isometrisch dargestellt sind, Figur 10 einen Schnitt durch das zusammengefügte Kupplungsteil gemäß Figur 9 entlang der Linie X-X in Figur 9 durch eine anders ausgebildetes Kupplungsteil, Figur 11 einen Längsschnitt entlang der Linie XI-XI in Figiur 10 durch ein anders ausgebildetes Kupplungsteil, Figur 12 eine Prinzipdarstellung eines mit dem Wischerarm verbundenen Wischblatts in Seitenansicht und Figur 13 einen Schnitt durch das Wischblatt gemäß Figur 12 entlang der Linie XIII-XIII.

### Beschreibung der Ausführungsbeispiele

Ein in Figur 1 dargestelltes Wischblatt 10 weist ein bandförmig langgestrecktes, federelastisches Tragelement 12 auf. An der von der zu wischenden Scheibe abgewandten oberen Bandfläche oder Oberseite 14 des Tragelements 12 ist ein wischblattseitiges Kupplungsteil 16 befestigt über welches das Wischblatt 10 mit einem ihm zugeordneten, wischerarmseitigen Gegenkupplungsteil 18 verbunden werden kann. Das Gegenkupplungsteil 18 ist fest mit einem Wischerarm 20 verbunden, dessen eines Ende 22 an einer nicht dargestellten Kraftfahrzeugkarosserie gelagert und dort um eine Pendelachse 21 pendelnd angetrieben ist. An dem anderen, freien Ende 24 des Wischerarms 20 ist das wischerarmseitige Kupplungsteil 18 befestigt. Die beiden Kupplungsteile 16 und 18 bilden zusammen eine Vorrichtung 26 zum Anschließen des Wischblatt 10 am angetriebenen Wischerarm 20. Die andere Bandfläche 28 des Tragelements 12 ist der zu wischenden Scheibe 30 zugewandt und wird als Unterseite des Tragelements 12 bezeichnet. An dieser Unterseite des Tragelements 12 ist eine langgestrecktes, gummielastisches Wischelement 32 längsachsenparallel angeordnet. Der Wischerarm 20 und damit auch das mit ihm verbundene Wischblatt 10 ist in Richtung des Pfeiles 34 zur Scheibe 30 belastet, deren zu wischende Oberfläche in Figur 1 durch eine strichpunktierte Linie 36 angedeutet ist. Weil die in aller Regel sphärisch gekrümmte Scheibe 30 nicht ein Abschnitt einer Kugeloberfläche darstellt, muß sich das Wischblatt 10 gegenüber dem Wischerarm 20 während seiner Wischbewegung (Doppelpfeil 38) ständig der jeweiligen Lage der Scheibenoberfläche - bezogen auf die Pendelachse 21 - mit einer Schwingbewegung anpassen können. Deshalb ist die Anschlußvorrichtung 26 gleichzeitig als Gelenkverbindung zwischen Wischblatt und Wischerarm ausgebildet. Die Gelenkachsen von Wischerarm 20 und Wischblatt 10 sind in Figur 1 beide mit der Bezugszahl 40 versehen worden, weil sich diese bei am Wischerarm montiertem Wischblatt decken. Diese dann gemeinsame Gelenk- oder Schwingachse erstreckt sich im wesentlichen in Richtung der Wischbewegung 38.

Da die strichpunktierte Linie 36 die stärkste Krümmung der Scheibenoberläche darstellen soll ist aus Figur 2 klar ersichtlich, daß die Krümmung des hier lediglich mit seinen beiden Enden an der Scheibe anliegenden Wischblatt 10 stärker ist als die maximale Scheibenkrümmung. Unter dem Anpressdruck (Pfeil 34 in Figur 1) legt sich das Wischblatt mit einer zum Wischelement gehörenden Wischleiste über seine gesamte Länge an der Scheibenoberfläche 36 an. Dabei baut sich im bandartigen federelastischen Tragelement 12 eine Spannung auf, welche für eine ordnungsgemäße Anlage des Wischelements 32 beziehungsweise der Wischleiste 42 über deren gesamte Länge an der Kraftfahrzeugscheibe 30 sorgt.

Im folgenden soll nun auf die besondere Ausgestaltung des Wischblatts 10 beziehungsweise von dem zu diesem gehörenden Kupplungsteil 16 näher eingegangen werden.

Bei einer ersten Ausführungsform des Kupplungsteils 16 gemäß den Figuren 3 bis 5 hat dieses einen im wesentlichen U-förmigen Querschnitt. Es hat somit eine U-Basis 50 und zwei mit Abstand voneinander angeordnete U-Schenkel 52, die sich in Längsrichtung des Tragelements 12 (Figur 1) erstrecken. Im Bereich der Gelenkachse beziehungsweise Schwingachse 40 sind an den freien Enden der beiden U-Schenkel 52 über einen Teilabschnitt des Kupplungsteils 16 gegeneinander gerichtete krallenartige Ansätze 54 angeordnet (Figuren 3 bis 5). Zwischen der Innenseite 56 der U-Basis 50 und den dieser zugewandten Innenflächen 58 der krallenartigen Ansätze 54 verbleibt ein Abstand, der in Figur 3 mit der Bezugszahl 60 versehen worden ist. Das Abstandsmaß zwischen den beiden einander zugewandten Wangen 62 der U-Schenkel 52 ist in Figur 5 mit 64 bezeichnet. Weiter ist in dem einen U-Schenkel 52 eine nutartige Aussparung 66 angeordnet, die sich im wesentlichen in Richtung des Abstands 60 erstreckt und die zur anderen Wange 52 hin offen ist. Weiter ist in den Figuren 3 bis 5 jeweils ein Mittelabschnitt des schon erwähnten Tragelements 12 strichpunktiert eingezeichnet, das in diesem Mittelabschnitt seine größte Breite 68 (Figur 1) aufweist. Das Abstandsmaß 64 ist so auf die größte Breite 68 des Tragelements 12 abgestimmt, daß dieses quer zu seiner Längserstreckung ordnungsgemäß geführt frei beweglich ist. Das Tragelement 12 ist über seine gesamte Längserstreckung derart gekrümmt, daß der Mittelabschnitt des unbelasteten Tragelements 12 weiter von der Scheibe 30 entfernt ist als seine beiden Endabschnitte (Figur 2). Die Krümmung ist so bemessen, daß das zwischen die U-Schenkel 52 eingeführte Tragelement 12 mit seiner Oberseite 14 an der Innenseite 56 der U-Basis 50 anliegt, während sich gleichzeitig die Unterseite 28 des Tragelements 12 an den beiden Endkanten 70 der krallenartigen Ansätze 54 vorgespannt abstützt. Es ergibt sich somit nach der Vormontage des Tragelements 12 - welches dann mit dem Wischelement 32 verbunden ist - eine sichere Dreipunktauflage des Tragelements an den beiden Endkanten 70 der Ansätze 54 und in dessen Scheitelbereich 72 an der Innenseite 56 der U-Basis 50. Wenn das Wischblatt aus dieser Montageposition (Figur 3) heraus auf die Scheibe 30 aufgesetzt wird, wird die Krümmung des Tragelements 12 verringert, wobei zunächst die beiden Enden des Wischelements 32 die Abstützfunktion der Endkanten 70 übernehmen, weil sich die Unterseite 28 des Tragelements 12 von diesen Endkanten 70 abhebt, bis das Wischelement beziehungsweise das Wischblatt seine in Figur 1 dargestellte Betriebsposition erreicht hat und über seine gesamte Länge an der zu wischenden Oberfläche 36 der Scheibe aufliegt. Die Anlagefläche 80 (Figur 4) zwischen dem Tragelement 12 und der Unterseite des Kupplungsteils 16 - gebildet durch die Innenseite 56 der U-Basis 50 - entspricht einer Linie, die sich in Richtung der Gelenkachse 40 erstreckt. Die Abhebebewegung des Tragelements 12 von den Endkanten 70 ist in Figur 3 mit den Pfeilen 74 angegeben. Während dieser Bewegung ist auch ein am Tragelement 12 seitlich vorspringender, in die Nut 66 greifender Vorsprung 78 frei beweglich. Er bewirkt jedoch in Zusammenarbeit mit den Seitenflächen der Nut 66 eine zuverlässige Längsverschiebesicherung zwischen dem Tragelement 12 und dem Kupplungsteil 16. Weiter zeigt Figur 4, daß die Anlage zwischen dem Tragelement 12 und dem Kupplungsteil 16 einer Linie entspricht, deren Breite - übertrieben gezeichnet - in Figur 4 mit 80 bezeichnet worden ist. Diese Anlage befindet sich direkt im Bereich der Gelenkachse 40, so daß diese sich innerhalb der Projektionsflächen von Gelenkzapfen befindet, die an einem der beiden Kupplungsteile 16, 18 angeordnet sind und in Lagerausnehmungen des anderen Kupplungsteils 18, 16 geführt sein können. Abweichend von der eben beschriebenen und mit den Figuren 3 bis 5 dargestellten Ausführungsform ist es auch denkbar den Vorsprung 78 des Tragelements 12 im Scheitel des Tragelements 12 vorzusehen. Weil dort weder bei der Montage des Tragelements noch während des Wischbetriebs eine Relativbewegung zwischen Tragelement und dem Kupplungsteil 16 erfolgt kann dann anstelle der Nut 66 im entsprechenden U-Schenkel 52 beispielsweise eine runde Ausnehmung vorgesehen werden. Während des Wischbetriebs kann das Tragelement 12 und mit diesem auch die Wischleiste 42 praktisch über seine gesamte Länge in Richtung der Doppelpfeile 82 frei federn und sich dabei den unterschiedlichen Krümmungen der Scheibenoberfläche 36 optimal anpassen.

Anhand der Figuren 6 bis 8 ist eine zweite Ausführungsform des wischblattseitigen Kupplungsteils 16 dargestellt und in Figur 8 mit der Bezugszahl 116 versehen worden. Wie aus Figur 8 zu entnehmen ist, ist das Kupplungsteil 116 aus zwei Teilen aufgebaut. Es hat einmal einen aus einem Metall gefertigten, im Querschnitt U-förmigen Träger 118 (Figur 7). Dieser Träger hat somit eine U-Basis 120, die in zueinander parallel verlaufende und mit Abstand voneinander angeordnete U-Schenkel 122 übergeht. Die U-Schenkel 122 erstrecken sich über einen verhältnismäßig großen Teilbereich der Länge des Trägers 118. An dem einem Ende des Trägers 118 ist anstelle der U-Schenkel 122 jeweils ein Biegelappen 124 angeordnet, der ebenfalls wie die U-Schenkel 122 einstückig mit der U-Basis 120 verbunden ist. Weiter ist der Mittelbereich der U-Basis 120 mit einer sich in Längsrichtung des Trägers 118 erstreckenden Ausformung 126 versehen. Zum wischblattseitigen Kupplungsteil 116 gehört ferner eine in Figur 6 dargestellte, aus einem elastischen Kunststoff gefertigte, als Gelenk dienende Umhüllung 128, die ebenfalls einen im wesentlichen U-förmigen Querschnitt aufweist. An die U-Basis 130 der Umhüllung 128 schließen somit zwei mit Abstand voneinander angeordnete U-Schenkel 132 an. An den Außenseiten der U-Schenkel 122 sind auf einer gemeinsamen Achse 134 liegende, im Querschnitt unrunde Gelenkzapfen 136 angeordnet. Weiter sind an den freien Enden über die U-Schenkel 122 des Trägers 118 hinausragenden U-Schenkel 132 der Umhüllung 128 gegeneinander gerichtete Rasthaken 138 vorgesehen die in einem Abstand von der U-Basis angeordnet sind, welche auf die Höhe der U-Schenkel 122 des Trägers 118 abgestimmt ist. Die aus einem elastischen Kunststoff gefertigte Umhüllung 128 kann somit unter vorübergehender Auslenkung ihrer U-Schenkel 132 auf den Träger 118 aufgerastet werden, so daß sich die in Figur 8 dargestellte Montageposition ergibt. Zur Aufnahme der Ausformung 126 des Trägers 118 ist die Innenseite der U-Basis 130 der Umhüllung 128 mit einer entsprechenden Vertiefung 140 versehen. Weiter ist in Figur 8 mit strichpunktierten Linien ein Querschnitt durch das Wischelement 142 eingezeichnet. Das Wischelement 142 hat in diesem Fall eine Kopfleiste 143, die mit dessen auf der Scheibe 30 anlegbaren Wischleiste 42 verbunden ist. In den voneinander abgewandten Seiten der Kopfleiste 143 ist jeweils eine Längsnut angeordnet. Das Tragelement, welches bei der Ausführungsform gemäß Figur 1 als einteiliges langgestrecktes Federband ausgebildet ist, ist bei der Ausführung gemäß Figur 8 längsgeteilt, so daß sich zwei das Tragelement bildende Tragelementschienen 144 ergeben, welche jeweils mit einer Längskante in den Nuten sitzen, die in der Kopfleiste 142 angeordnet sind. Die Tragelementschienen 144 übernehmen zusammen die Funktion des Tragelements. Weiter zeigt Figur 8, daß das aus dem Träger 118 und der Umhüllung 128 gebildete Kupplungsteil 116 so auf die Tragelementschienen 144 aufgesetzt ist, daß deren voneinander abgewandten Außenkanten an den Innenseiten der U-Schenkel 122 des Trägers 118 sowie an den einander zugewandten Innenflächen der Biegelappen 124 frei beweglich geführt sind. Der über die Tragelementschienen 144 hinaus ragende leistenförmige Abschnitt 148 der Kopfleiste 142 liegt dabei in der Ausformung 126 im Träger 118. Zur Befestigung des Kupplungsteils 116 an den Tragelementteilen 144 werden nun die Biegelappen 124 des Trägers 118 so gebogen, daß sie die Außenkanten der Tragelementschienen 144 umgreifen und an der Unterseite der Tragelementschienen anliegen (Figur 8). Die Verbindung zwischen dem Kupplungsteil 116 und dem Tragelement 144 wird also lediglich durch die beiden Biegelappen 124 bewirkt. Das Maß 125 der Biegelappen 124 in Längsrichtung des Tragelements 144 gemessen ist so ausgelegt, daß sich eine Anlagefläche zwischen Tragelement und Kupplungsteil ergibt die in Längsrichtung des Wischblatts gemessen kleiner ist als der Durchmesser 135 der Gelenkzapfen 136. Auch in diesem Fall ergibt sich somit eine sehr gute freie Beweglichkeit des Tragelements 144 gegenüber dem Kupplungsteil 116. Es ist einleuchtend, daß die Befestigung des Zweistoff-Kupplungsteils 116 nicht auf die Verwendung bei in Längsrichtung zweigeteilten Tragelementen beschränkt ist. Es ist durchaus vorstellbar ein solches Kupplungsteil 116 beispielsweise auch bei Verwendung eines bandartigen einteiligen Tragelements 12 gemäß Figur 1 einzusetzen.

Eine vorteilhafte Ausgestaltung des Kupplungsteils 16 gemäß den Figuren 1 bis 5 ist in den Figuren 9 und 10 dargestellt. Allerdings ist bei diesem Ausführungsbeispiel - ebenso wie beim Ausführungsbeispiel gemäß den Figuren 6 bis 8 das Tragelement 12 durch zwei Tragelementschienen 218 gebildet, welche wie bei der Ausführungsform gemäß den Figuren 6 bis 8 mit ihren einen Längskanten in Längsnuten 220 liegen, die in einer zum Wischelement 222 gehörenden, mit der Wischleiste 224 verbundenden Kopfleiste 226 angeordnet sind (Figur 10). Wie Figur 9 zeigt, ist das Kupplungsteil 216 in Längsrichtung des Tragelements 218 geteilt. Es ergeben sich somit zwei Kupplungsteilhälften 228 und 230 von denen jede an ihrer Außenseite mit einem Gelenkzapfen 232 versehen ist. Wenn die beiden Kupplungsteilhälften 228 und 230 zusammen gefügt sind weisen die beiden Gelenkzapfen 232 eine gemeinsame Gelenk- oder Schwingachse 234 auf (Figur 10). Die Kupplungsteilhälfte 228 hat beim Ausführungsbeispiel zwei fingerartige Vorsprünge 236 welche die Längsmittelachse des Tragelements 218 übergreifen und denen in der anderen Kupplungsteilhälfte 230 vorhandene, diesen zugeordnete Ausnehmungen 238 zugeordnet sind. Die beiden Kupplungsteilhälften 228 und 230 sind aus einem elastischen Kunststoff gefertigt. Sie sind mit einer der jeweiligen anderen Kupplungsteilhälfte zugewandten Längsnut 240 versehen, welche jeweils zur Aufnahme des äußeren Längsstreifens voneinander abgewandten Längskanten der Tragelementschienen 218 versehen. Die Höhe 242 (Figur 9) der Längsnuten 240 ist größer als die Dicke der Tragelementschienen 218, so daß sich bei dieser Ausführungsform des Kupplungsteils 216 eine ähnliche Situation ergibt, wie sie anhand der Figuren 3 bis 5 geschildert worden ist, wenn das Tragelement beziehungsweise die beiden Tragelementschienen 218 entsprechend stark gekrümmt sind. Die Anordnung der fingerartigen Vorsprünge 236 der Kupplungsteilhälfte 228 und die Anordnung der Ausnehmungen 238 in der Kupplungsteilhälfte 230 sind so getroffen, daß sich entsprechende fingerartige Vorsprünge 244 an der Kupplungsteilhälfte 230 ergeben denen entsprechende Ausnehmungen 246 in der Kupplungsteilhälfte 228 zugeordnet sind. Die jeweiligen zungen- oder fingerartigen Vorsprünge 236 beziehungsweise 244 weisen nahen ihren freien Enden eine zu seiner Kupplungsteilhälfte weisende Rastschulter 248 auf, die im zusammengebauten Zustand mit der dieser zugewandten Längsseite 249 der Kopfleiste 226 rastend zusammenarbeitet, wenn die beiden Kupplungsteilhälften 228 230 zusammengefügt sind und so die beiden Tragelementschienen 218 in ihrer vorschriftsmäßigen Position in den Längsnuten 220 der Kopfleiste 226 halten. Ferner hat jeder fingerartige Vorsprung 236 beziehungsweise 244 eine an seinem freien Ende angeordnete Nase 250, die in zusammengebautem Zustand der beiden Kupplungsteilhälften in eine Ausnehmung 252 der anderen Kupplungsteilhälfte eintaucht. Beim Zusammenfügen der beiden Kupplungsteilhälften 228 und 230 lenken die jeweiligen fingerartigen Vorsprünge 236 beziehungsweise 244 beim Überqueren der Kopfleiste 226 etwas nach oben aus. Damit die Nasen 250 dann in ihrer Ausnehmungen 252 gelangen können werden die fingerartigen Vorsprünge unter elastischer Verformung der Kopfleiste 226 nach unten gedrückt, bis die Nasen 250 in ihrem Ausnehmungen 252 sitzen und die Rastschultern 248 mit den entsprechenden Längsseiten der Kopfleiste 226 zusammenwirken. Durch die Zweiteilung des Tragelements 218 wird dessen Montage auf die Tragelementschienen 218 - welche schon in den Nuten des Wischelements 222 sitzen erheblich vereinfacht.

Eine besonders stabile Ausgestaltung der beiden, das Kupplungsteil 316 bildenden Kupplungsteilhälften 328 und 330 ist in Figur 11 im Längsschnitt dargestellt, wo die Zungen 336 der einen Kupplungsteilhälften mit seitlichen Paßfedern 338 versehen sind, welche in diesen zugeordneten Führungsnuten 340 im Bereich der Ausnehmungen 342 der anderen Kupplungsteilhälfte geführt werden. Das Zusammenfügen der beiden Kupplungsteilhälften 328 und 330 erfolgt in diesem Fall unter vorübergehender Verformung der Kopfleiste 226, weil die Führungsnuten 340 und die darin gleitenden Passfedern ein Auslenken der fingerartigen Vorsprünge verhindern.

Die in Figur 12 dargestellte Teil- Seitenansicht eines mit einem sogenannten Spoiler 410 versehenen Wischblatts 412 weist ebenfalls ein bandartiges Tragelement 414 auf, an dessen der Scheibe zugewandten Unterseite sich eine Wischleiste 416 befindet. An der Oberseite des Tragelements 414 befindet sich der Spoiler 410 (Figur 13), der als Windabweisleiste für den Fahrtwind dient, der für einen ordnungsgemäßen Auflagedruck der Wischleiste 416 an der zu wischenden Scheibe auch bei hohen Fahrtgeschwindigkeiten sorgt. Wie bei den schon beschriebenen Ausführungsbeispielen ist das Wischblatt 412 in seinem Mittelabschnitt mit einer Anschlussvorrichtung 418 ausgestattet welche zum Verbinden des Wischblatts 412 mit den angetriebenen Wischerarm 420 dient. Die Anschlussvorrichtung umfasst, wie anhand von Figur 1 schon beschrieben ein wischblattseitiges Kupplungsteil 422 und ein mit diesem zusammenarbeitendes wischerarmseitiges Gegenkupplungsteil 424. Das wischblattseitige Kupplungsteil 422 weist, ebenfalls zwei achsgleiche Gelenkzapfen 426 auf, welche in Lagerausnehmungen 428 des wischerarmseitigen Kupplungsteils 424 geführt sind. Die beiden Gelenkzapfen 426 sind möglichst nahe an dem von der Abtriebsseite des Wischerarms 420 abliegenden Endabschnitt des wischblattseitigen Kupplungsteils 422 angeordnet, so dass der Spoiler 410 bis nahe an die Gelenk- oder Schwingachse geführt werden kann.

Von besonderer Bedeutung ist ein aus Figur 12 ersichtliches Merkmal. Die beiden im Längs-Mittelabschnitt angeordneten, aus den Wischblatt-Längsseiten ragenden Gelenkzapfen 426 werden zur Montage des Gelenkverbindung zwischen Wischerarm 420 und Wischblatt 418 über Montagekanäle 430 in ihre wischerarmseitigen Lagerausnehmungen 428 eingebracht, welche ausgehend von den Ausnehmungen zur zu wischenden Scheibe 30 hin offen sind. Der Wischblatt-Anlegedruck (Pfeil 34) sorgt für eine betriebssichere Gelenkverbindung, das nur nach einem bewussten Abheben des Wischblatts von der Scheibe die Gelenkverbindung selbst gelöst werden kann. Dabei ist es unerheblich, ob die Gelenkverbindung als sogenannte Steck-Drehverbindung - mit unrundem Zapfenquerschnitt - oder als Rastverbindung ausgebildet ist.

Allen Ausführungsbeispielen ist gemeinsam, dass das Tragelement 12 bzw. 144 bzw. 218 über seine gesamte Länge derart gekrümmt ist, dass der Mittelabschnitt des unbelastet an der Scheibe 30 angelegten Tragelements weiter von der Scheibe entfernt ist als seine beiden Endabschnitte und dass die Anlagefläche zwischen Tragelement und der Unterseite des Kupplungsteils in Längsrichtung des Wischblatts gemessen kleiner ist als das 1,5-fache der maximalen Breite des Tragelements.

## Patentansprüche

1. Wischblatt (10) für Scheiben (30) von Kraftfahrzeugen mit einem bandartigen, langgestreckten, federelastischen Tragelement (12) für ein an der Scheibe anlegbares, an der der Scheibe zugewandten unteren Bandfläche angeordnetes langgestrecktes, längsachsenparallel zum Tragelement ausgerichtetes, gummielastisches Wischelement (32) und mit einem an der von der Scheibe abgewandten oberen Bandfläche des Tragelements positionierten, wischblattseitigen Kupplungsteil (16) zum gelenkigen Verbinden des Wischblatts (10) mit einem zu einem hin- und hergehend angetriebenen Wischerarm (20) gehörenden Gegenkupplungsteil (18), wobei die im Längs-Mittelabschnitt des Tragelements befindliche Gelenkachse (40) im wesentlichen quer zur Längserstreckung des Wischblatts (10) angeordnet ist und das Kupplungsteil (16) mit seiner ebenen Unterseite der oberen Bandfläche des Tragelements zugewandt ist, wobei das Tragelement (12) über seine gesamte Länge derart gekrümmt ist, dass der Mittelabschnitt des unbelastet an der Scheibe (30) angelegten Tragelements (12) weiter von der Scheibe entfernt ist als seinen beiden Endabschnitten, und die Anlagefläche (80) zwischen Tragelement (12) und der Unterseite des Kupplungsteils (16) in Längsrichtung des Wischblatts gemessen kleiner ist als das 1,5-fache der maximalen Breite (68) des Tragelements (12), **dadurch gekennzeichnet, dass** ein Gelenk (128) zwischen dem Kupplungsteil (16) und dem Gegenkupplungsteil (18) in Lageraufnahmen geführte Gelenkzapfen (136) aufweist, und dass die Anlagefläche (20) zwischen Tragelement (12) und dem Kupplungsteil (16 bzw. 116 bzw. 216) in Längsrichtung des Wischblatts gemessen kleiner ist als der Durchmesser der Gelenkzapfen (136).

2. Wischblatt nach Anspruch 1, **dadurch gekennzeichnet, dass** die Anlage zwischen Tragelement (12) und dem Kupplungsteil einer Linie (80) entspricht, die sich in Richtung der Gelenkachse (40) erstreckt und die innerhalb der Projektionsfläche der Gelenkzapfen (136) liegt.

3. Wischblatt nach einem der Ansprüche 1 oder 2, **dadurch gekennzeichnet, dass** das Kupplungsteil (16) einen U-förmigen Querschnitt hat, dass die Innenseite (56) der U-Basis (50) die Unterseite des Kupplungsteils bildet und dass der Abstand (64) zwischen der beiden U-Schenkel (52) voneinander auf die im Längs- Mittelabschnitt des Tragelements vorhandene maximale Breite (68) des Tragelements (12) abgestimmt ist.

4. Wischblatt nach Anspruch 3, **dadurch gekennzeichnet, dass** an dem freien Ende eines jeden U-Schenkels (52) und mit Abstand von der Unterseite (56) des Kupplungsteils (16) zumindest im Bereich der Anlagefläche zwischen Tragelement (12) und Kupplungsteil (16) angeordnete, krallenartig gegeneinander gerichtete Ansätze (54) vorhanden sind, welche Abstützungen für das Tragelement (12) bilden.

5. Wischblatt nach einem der vorhergehenden Ansprüche, **dadurch gekennzeichnet, dass** das Kupplungsteil (116) einen aus Metall gefertigten, im Querschnitt U-förmigen Träger (118) hat, dessen Außenwände mittels einer aus einem Kunststoff gefertigten, im Querschnitt U-förmigen Umhüllung (128) abgedeckt sind und dass an den Außenwänden der U-Schenkel (132) der Umhüllung (128) zur Gelenkverbindung zwischen Wischerarm und Wischblatt gehörenden Gelenkzapfen (136) angeordnet sind.

6. Wischblatt nach Anspruch 5, **dadurch gekennzeichnet, dass** der metallische Träger (118) mit seiner U-Basis (120) verbundene, die beiden Längs- Außenkanten des Tragelements übergreifende Biegelappen (124) aufweist.

7. Wischblatt nach einem der Ansprüche 5 oder 6, **dadurch gekennzeichnet, dass** die aus einem elastischen Kunststoff gefertigte Umhüllung (128) mit ihren U-Schenkeln (132) über die U-Schenkel (122) des Trägers (118) hinausragt und dass an den freien Enden der U-Schenkel (132) der Umhüllung (128) gegeneinander vorspringende Rasthaken (138) angeordnet sind.

8. Wischblatt nach einem der vorhergehenden Ansprüche, **dadurch gekennzeichnet, dass** das Kupplungsteil (122) mit quer zur Längserstreckung des Wischblatts (412) vorspringenden, zur Gelenkverbindung zwischen Wischerarm (418) und Wischblatt (412) gehörenden Gelenkzapfen (426) versehen ist, welche an dem von der Antriebsseite des Wischerarms (420) abliegenden Endabschnitt des Kupplungsteils (422) angeordnet sind.

9. Wischblatt nach einem der Ansprüche 1 bis 8 mit einem in Längsrichtung geteilten Tragelement (218) dessen beiden einander zugewandten Längskanten in seitlichen Nuten (220) einer mit der Wischleiste verbundenen Kopfleiste (226) liegen, **dadurch gekennzeichnet, dass** das Kupplungsteil (216) in Längsrichtung des Tragelements (218) geteilt und jede der beiden Kupplungsteilhälften (228, 230) mit einer der jeweiligen anderen Kupplungsteilhälfte zugewandten Längsnut (240) zur Aufnahme eines Längsstreifens mit den voneinander abgewandten Längskanten der beiden Tragelementteile (218) versehen ist und dass die beiden Kupplungsteilhälften (228, 230) miteinander verbindbar sind.

10. Wischblatt nach Anspruch 9, **dadurch gekennzeichnet, dass** wenigstens eine der beiden aus einem elastischen Kunststoff gefertigten Kupplungsteilhälften (228, 230) mit einem fingerartigen Vorsprung (236, 244) die Längsmittelachse des Tragelements (218) übergreifend in eine in der anderen Kupplungsteilhälfte vorhandene, diesem zugeordnete Ausnehmung (238 beziehungsweise 240) eintaucht.

11. Wischblatt nach Anspruch 10, **dadurch gekennzeichnet, dass** der Vorsprung (236, 244) nahe seinem freien Ende mit einer zu seiner Kupplungsteilhälfte weisenden Rastschulter (248) versehen ist, die mit der dieser zugewandten Längsseite der Kopfleiste (226) rastend zusammenwirkt.

12. Wischblatt nach Anspruch 11, **dadurch gekennzeichnet, dass** eine am freien Ende des Vorsprungs (236 beziehungsweise 244) angeordnete Nase (250) in eine Ausnehmung (252) der anderen Kupplungsteilhälfte eintaucht.

13. Wischblatt nach einem der Ansprüche 11 bis 12, **dadurch gekennzeichnet, dass** die zungen- oder fingerartigen Vorsprünge (336) der einen Kupplungsteilhälfte mit seitlichen Passfedern (338) versehen sind, denen Führungsnuten (340) in der anderen Kupplungsteilhälfte zugeordnet sind.

14. Wischblatt nach einem der vorhergehenden Ansprüche, **dadurch gekennzeichnet, dass** das Tragelement (12) im Bereich des Kupplungsteils (16) mit einem seitlichen Vorsprung (78) versehen ist, dem eine Ausnehmung (66) in der dieser Seite zugewandten Innenseite des Kupplungsteils zugeordnet ist.

15. Wischblatt, nach einem der vorhergehenden Ansprüche, das in seinem Längs-Mittelabschnitt zwei die Gelenkachse (40) bildende, miteinander fluchtende Gelenkzapfen (426) aufweist, die in Lagerausnehmungen (428) des Wischerarms (420) geführt sind, **dadurch gekennzeichnet, dass** jede Lagerausnehmung (428) einen zur Scheibe (30) hin offenen, jeweils einem Gelenkzapfen (426) zugeordneten Montagekanal (430) aufweist.

## Claims

1. Wiper blade (10) for motor vehicle windows (30), having a band-type, elongate, resilient supporting element (12) for an elongate, rubber-elastic wiping element (32) that can be placed against the window, is arranged on the lower band surface facing the window and is aligned parallel to the longitudinal axis of the supporting element, and having a wiper-blade-side coupling part (16) which is positioned on the upper band surface of the supporting element that faces away from the window and is intended for the articulated connection of the wiper blade (10) to a mating coupling part (18) belonging to a wiper arm (20) driven in a reciprocating manner, the axis of articulation (40), which is situated in the longitudinal central section of the supporting element, being arranged essentially transversely with respect to the longitudinal extent of the wiper blade (10) and the coupling part (16), with its planar lower side, facing the upper band surface of the supporting element, the supporting element (12) being curved over its entire length in such a manner that the central section of the supporting element (12), which is placed when not stressed against the window (30), is further away from the window than its two end sections, and the bearing surface (80) between the supporting element (12) and the lower side of the coupling part (16) being dimensioned to be smaller in the longitudinal direction of the wiper blade than 1.5 times the maximum width (68) of the supporting element (12), **characterized in that** a joint (128) between the coupling part (16) and the mating coupling part (18) has pivots (136) guided in bearing sockets, and **in that** the bearing surface (80) between the supporting element (12) and the coupling part (16 or 116 or 216) is dimensioned to be smaller in the longitudinal direction of the wiper blade than the diameter of the pivots (136).

2. Wiper blade according to Claim 1, **characterized in that** the bearing between the supporting element (12) and the coupling part corresponds to a line (80) which extends in the direction of the axis of articulation (40) and which is situated within the area of projection of the pivots (136).

3. Wiper blade according to either of Claims 1 and 2, **characterized in that** the coupling part (16) has a U-shaped cross section, **in that** the inside (56) of the U-base (50) forms the lower side of the coupling part, and **in that** the distance (64) of the two U-limbs (52) from each other is matched to the maximum width (68) of the supporting element (12) that is present in the longitudinal central section of the supporting element.

4. Wiper blade according to Claim 3, **characterized in that** on the free end of each U-limb (52) and at a distance from the lower side (56) of the coupling part (16) there are lugs (54) which are arranged at least in the region of the bearing surface between the supporting element (12) and coupling part (16), are directed towards one another in a claw-like manner and form supports for the supporting element (12).

5. Wiper blade according to one of the preceding claims, **characterized in that** the coupling part (116) has a cross-sectionally U-shaped support (118) which is manufactured from metal and the outer walls of which are covered by means of a cross-sectionally U-shaped covering (128) manufactured from a plastic, and **in that** pivots (136) belonging to the articulated connection between the wiper arm and wiper blade are arranged on the outer walls of the U-limbs (132) of the covering (128).

6. Wiper blade according to Claim 5, **characterized in that** the metallic support (118) has bending tabs (124) which are connected to its U-base (120) and engage over the two longitudinal outer edges of the supporting element.

7. Wiper blade according to either of Claims 5 and 6, **characterized in that** the covering (128), which is manufactured from a flexible plastic, protrudes with its U-limbs (132) over the U-limbs (122) of the support (118), and **in that** latching hooks (138) projecting towards each other are arranged on the free ends of the U-limbs (132) of the covering (128).

8. Wiper blade according to one of the preceding claims, **characterized in that** the coupling part (122) is provided with pivots (426) which protrude transversely with respect to the longitudinal extent of the wiper blade (412), belong to the articulated connection between the wiper arm (418) and wiper blade (412) and are arranged on that end section of the coupling part (422) which is situated away from the driving side of the wiper arm (420).

9. Wiper blade according to one of Claims 1 to 8, having a supporting element (218) which is divided in the longitudinal direction and the two mutually facing longitudinal edges of which are situated in lateral grooves (220) of a top strip (226) connected to the wiper strip, **characterized in that** the coupling part (216) is divided in the longitudinal direction of the supporting element (218) and each of the two coupling-part halves (228, 230) is provided with a longitudinal groove (240), which faces the respective other coupling-part half, for accommodating a longitudinal strip having the longitudinal edges, which face away from each other, of the two supporting-element parts (218), and **in that** the two coupling-part halves (228, 230) can be connected to each other.

10. Wiper blade according to Claim 9, **characterized in that** at least one of the two coupling-part halves (228, 230), which are manufactured from a flexible plastic, enters with a finger-like projection (236, 244), in a manner reaching over the longitudinal central axis of the supporting element (218), into a recess (238 or 240) which is present in the other coupling-part half and is assigned to the said projection.

11. Wiper blade according to Claim 10, **characterized in that** the projection (236, 244) is provided in the vicinity of its free end with a latching shoulder (248) which points towards its coupling-part half and interacts in a latching manner with that longitudinal side of the top strip (226) which faces the said latching shoulder.

12. Wiper blade according to Claim 11, **characterized in that** a nose (250) which is arranged at the free end of the projection (236 or 244) enters into a recess (252) in the other coupling-part half.

13. Wiper blade according to either of Claims 11 and 12, **characterized in that** the tongue- or finger-like projections (336) of the one coupling-part half are provided with lateral feathers (338) to which guide grooves (340) in the other coupling-part half are assigned.

14. Wiper blade according to one of the preceding claims, **characterized in that** the supporting element (12) is provided in the region of the coupling part (16) with a lateral projection (78) to which a recess (66) in the inside of the coupling part, which inside faces this side, is assigned.

15. Wiper blade according to one of the preceding claims, which has, in its longitudinal central section, two pivots (426) which form the axis of articulation (40), are aligned with each other and are guided in bearing recesses (428) in the wiper arm (420), **characterized in that** each bearing recess (428) has an installation channel (430) which is open towards the window (30) and is assigned one pivot (426) in each case.

## Revendications

1. Raclette d'essuie-glace (10) pour pare-brise (30) de véhicules automobiles avec un élément porteur (12) allongé de type bande à déformation élastique pour un élément d'essuie-glace (32) en caoutchouc élastique, allongé, orienté parallèlement à l'élément porteur dans l'axe longitudinal, disposé contre la surface de bande inférieure tournée vers le pare-brise et pouvant être placé sur le pare-brise et avec un demi-accouplement (16) côté essuie-glace positionné contre la surface de bande supérieure de l'élément porteur opposée au pare-brise afin de relier de manière articulée la raclette d'essuie-glace (10) à un demi-accouplement inverse (18) appartenant à un bras d'essuie-glace (20) entraîné en va-et-vient, l'essieu articulé (40), se trouvant dans la section centrale longitudinale de l'élément porteur, étant disposé essentiellement en biais par rapport à l'extension longitudinale de la raclette d'essuie-glace (10) et le demi-accouplement (16) étant tourné vers la face inférieure plane de la surface de bande supérieure de l'élément porteur, l'élément porteur (12) étant recourbé sur toute sa longueur de manière à ce que la section centrale de l'élément porteur (12) posé sans contrainte contre le pare-brise (30) soit plus éloigné du pare-brise que ses deux sections d'extrêmité et la surface de contact (80) entre l'élément porteur (12) et la face inférieure du demi-accouplement (16) étant inférieure dans la direction longitudinale de la raclette d'essuie-glace à 1, 5 fois la largeur maximale (68) de l'élément porteur (12),
**caractérisée en ce qu'**
une articulation (128) entre le demi-accouplement (16) et le demi-accouplement inverse (18) comporte des pivots (136) introduits dans les logements de palier et la surface de contact (80) entre l'élément porteur (12) et le demi-accouplement (16 et/ou 116 et/ou 216) est inférieure dans la direction longitudinale de la raclette d'essuie-glace au diamètre des pivots (136).

2. Raclette d'essuie-glace selon la revendication 1,
**caractérisée en ce que**
la disposition entre l'élément porteur (12) et le demi-accouplement correspond à une ligne (80) qui s'étend dans la direction de l'axe de l'articulation (40) et qui se trouve dans la surface de projection des pivots (136).

3. Raclette d'essuie-glace selon l'une quelconque des revendications 1 ou 2,
**caractérisée en ce que**
le demi-accouplement (16) est doté d'une section transversale en U, la face intérieure (56) de la base en U (50) forme la face inférieure du demi-accouplement et **en ce que** l'écart (64) entre les deux branches en U (52) est ajusté à la largeur (68) maximale de l'élément porteur (12) existant dans la section centrale longitudinale de l'élément porteur.

4. Raclette d'essuie-glace selon la revendication 3,
**caractérisée en ce que**
des épaulements (54) en forme de griffe dirigés les uns contre les autres et disposés au moins dans la zone de surface de contact entre l'élément porteur (12) et le demi-accouplement (16) sont prévus sur l'extrémité libre d'une branche en U (52) et à une certaine distance de la face inférieure (56) du demi-accouplement (16), lesquels épaulements forment des appuis pour l'élément porteur (12).

5. Raclette d'essuie-glace selon l'une quelconque des revendications précédentes,
**caractérisée en ce que**
le demi-accouplement (116) a un support (118) de métal en U dans sa section transversale, dont les parois extérieures sont recouvertes à l'aide d'une enveloppe (128) de matière plastique en U dans sa section transversale et des pivots (136) faisant partie de l'enveloppe (128) pour l'assemblage articulé entre le bras d'essuie-glace et la raclette d'essuie-glace sont disposés sur les parois extérieures des branches en U (132).

6. Raclette d'essuie-glace selon la revendication 5,
**caractérisée en ce que**
le support métallique (118) comporte des pattes de flexion (124) reliées à sa base en U (120) et en prise avec les deux arêtes extérieures longitudinales de l'élément porteur.

7. Raclette d'essuie-glace selon l'une quelconque des revendications 5 ou 6,
**caractérisée en ce que**
l'enveloppe (128) en matière plastique élastique dépasse avec ses branches en U (132) sur les branches en U (122) du support (118) et **en ce que** des crochets d'arrêt (138) faisant saillie l'un contre l'autre sont disposés sur les extrémité libres des branches en U (132) de l'enveloppe (128).

8. Raclette d'essuie-glace selon l'une quelconque des revendications précédentes,
**caractérisée en ce que**
le demi-accouplement (122) est doté de pivots (426) appartenant à l'assemblage articulé entre le bras d'essuie-glace (418) et la raclette d'essuie-glace (412) et faisant saillie en biais par rapport à l'extension longitudinale de la raclette d'essuie-glace (412), lesquels pivots sont disposés sur la section d'extrêmité du demi-accouplement (422) éloignée de la face d'entraînement de la raclette d'essuie-glace (420).

9. Raclette d'essuie-glace selon l'une quelconque des revendications 1 à 8 avec un élément porteur (218) divisé dans la direction longitudinale et dont les deux arêtes longitudinales tournées l'une vers l'autre se trouvent dans des rainures latérales (220) d'une moulure de tête (226) reliée à la raclette d'essuie-glace,
**caractérisée en ce que**
le demi-accouplement (216) est divisé dans la direction longitudinale de l'élément porteur (218), chacune des deux moitiés du demi-accouplement (228, 230) est dotée d'une rainure longitudinale (240) tournée vers l'autre moitié respective du demi-accouplement pour loger un raidisseur longitudinal avec les arêtes longitudinales opposées les unes aux autres des deux parties de l'élément porteur (218) et les deux moitiés du demi-accouplement (228, 230) sont reliées l'une à l'autre.

10. Raclette d'essuie-glace selon la revendication 9,
**caractérisée en ce qu'**
au moins une des deux moitiés du demi-accouplement (228, 230) fabriquées en matière plastique élastique avec une saillie en forme de doigt (236, 244) en prise avec l'axe central longitudinal de l'élément porteur (218) plonge dans un évidement (238 et/ou 240) associé à l'élément porteur (218) et existant dans l'autre moitié du demi-accouplement.

11. Raclette d'essuie-glace selon la revendication 10,
**caractérisée en ce que**
la saillie (236, 244) est dotée près de son extrémité libre d'un épaulement d'arrêt (248) tourné vers la moitié du demi-accouplement, lequel épaulement d'arrêt agit en s'accrochant à la face longitudinale de la moulure de tête (226) tournée vers cet épaulement.

12. Raclette d'essuie-glace selon la revendication 11,
**caractérisée en ce qu'**
un taquet (250) disposé sur l'extrémité libre de la saillie (236 et/ou 244) plonge dans un évidement (252) de l'autre moitié du demi-accouplement.

13. Raclette d'essuie-glace selon l'une quelconque des revendications 11 à 12,
**caractérisée en ce que**
les saillies (336) en forme de languette ou de doigt de l'une des moitiés du demi-accouplement sont dotées de clavettes parallèles latérales (338) fixées par vis auxquelles sont associées des rainures de guidage (340) dans l'autre moitié du demi-accouplement.

14. Raclette d'essuie-glace selon l'une quelconque des revendications précédentes,
**caractérisée en ce que**
l'élément porteur (12) est doté dans la zone du demi-accouplement (16) d'une saillie latérale (78) à laquelle est associée un évidement (66) dans la face intérieure du demi-accouplement tournée vers ce côté.

15. Raclette d'essuie-glace, selon l'une quelconque des revendications précédentes, qui comporte dans sa section centrale longitudinale deux pivots (426) s'affleurant l'un l'autre, formant l'axe d'articulation (40) et guidés dans des évidements de palier (428) de la raclette d'essuie-glace (420),
**caractérisée en ce que**
chaque évidement de palier (428) présente un canal de montage (430) associé respectivement à un pivot (426) et s'ouvrant vers le pare-brise (30).
